# EUROPÄISCHE PATENTSCHRIFT

(11) **EP 2 190 677 B1**
(45) Veröffentlichungstag und Bekanntmachung des Hinweises auf die Patenterteilung: **09.10.2013**
(21) Anmeldenummer: 08775044.4
(22) Anmeldetag: 11.07.2008
(51) Int. Cl.: B42D 15/00, B42D 15/10

(54) **DOKUMENT UND VERFAHREN ZUR HERSTELLUNG EINER ANZEIGEVORRICHTUNG**
DOCUMENT AND METHOD FOR PRODUCING A DISPLAY DEVICE
DOCUMENT ET PROCÉDÉ DE FABRICATION D'UN DISPOSITIF D'AFFICHAGE

(30) Priorität: 17.08.2007 DE 102007039041
(43) Veröffentlichungstag der Anmeldung: 02.06.2010
(73) Patentinhaber: Bundesdruckerei GmbH, 10958 Berlin (DE)
(72) Erfinder: PFLUGHOEFFT, Malte, 13347 Berlin (DE); ARTHUR, Mathea, 14199 Berlin (DE); FISCHER, Jörg, 13053 Berlin (DE)
(74) Vertreter: Richardt Patentanwälte GbR
(86) Internationale Anmeldenummer: PCT/EP2008/059135
(87) Internationale Veröffentlichungsnummer: WO 2009/024409

(56) Entgegenhaltungen:
- WO-A-03/054807
- DE-A1-102005 030 628
- GB-A- 2 151 987

## Beschreibung

Die Erfindung betrifft ein Dokument, insbesondere ein Wert- oder Sicherheitsdokument mit einer Anzeigevorrichtung zur Wiedergabe von Daten, sowie ein Verfahren zur Herstellung eines Dokuments mit einer solchen Anzeigevorrichtung.

Aus dem Stand der Technik sind Anzeigen bekannt, die Bilddaten auch ohne ständige Energieversorgung wiedergeben können. Solche Anzeigen benötigen nur dann elektrische Energie, wenn sich die wiederzugebenden Bilddaten ändern. Hierbei handelt es sich beispielsweise um bistabile Anzeigen, wie zum Beispiel elektrophoretische Anzeigen, elektrochrome Anzeigen, Drehelementanzeigen, ferroelektrische Anzeigen, Anzeigen auf der Basis des Elektrowetting-Effekts sowie bistabile LCD-Anzeigen, zum Beispiel twisted nematic, super twisted nematic, cholesterische oder nematische LCD-Anzeigen. Dabei kann es sich ferner auch um Hybridanzeigen handeln, die verschiedene dieser Anzeigetechnologien miteinander kombinieren.

Ferner sind aus dem Stand der Technik flexible, bistabile Anzeigen bekannt, die von der Firma Citala kommerziell erhältlich sind. Solche Anzeigen sind auch aus US 2006/0250534 A1 bekannt. Weitere bistabile elektrophoretische Anzeigen sind beispielsweise aus WO 99/53371 und EP 1 715 374 A1 bekannt.

Bistabile Anzeigen werden auch als "Electronic Paper Display" (EPD) bezeichnet.

Solchen bistabilen Anzeigen haben im Allgemeinen den Vorteil, dass sie sich bei heller Beleuchtung sehr gut lesen lassen, und dass keine Energieversorgung erforderlich ist, um über lange Zeit gleich bleibende Bilddaten wiederzugeben. Nachteilig bei solchen Anzeigen ist, dass sie ohne Beleuchtung nicht lesbar sind und dass eine Farbdarstellung nur schwer realisierbar ist.

Ebenfalls sind aus dem Stand der Technik Anzeigen bekannt, die zur Wiedergabe von Bilddaten eine Energieversorgung benötigen. Hierbei handelt es sich um emissive Anzeigen, wie zum Beispiel um LED-Anzeigen, insbesondere anorganische, organische oder Hybrid-LED-Anzeigen. Solche Anzeigen können auf der Basis von Dünnfilmtransistoren (Thin-film Transistors - TFTs) realisiert sein, insbesondere transparenten TFTs, wie sie zum Beispiel aus P. Görrn, P. Hölzer, T. Riedl, W. Kowalsky, J. Wang, T. Weimann, P. Hinze, and S. Kipp: Stability of transparent zinc tin oxide transistors under bias stress, Appl. Phys. Lett. 90, 063502 (2007); Proceedings of SPIE -- Volume 6486; Light-Emitting Diodes: Research, Manufacturing, and Applications XI, Klaus P. Streubel, Heonsu Jeon, Editors, 64860F (Feb. 13, 2007) und Thin-film transistors with transparent amorphous zinc indium tin oxide channel layer, M. S. Grover et al, 2007, J. Phys. D: Appl. Phys. 40 1335-1338, bekannt sind.

Die Herstellung von TFTs durch direktes Aufbringen mit Hilfe von Drucktechnik ist an sich bekannt aus WO 03/098696 A1.

Ein emissives Display kann auch auf der Basis eines elektrolumineszierenden Mediums realisiert sein, wie es zum Beispiel aus US 2002/0079494 A1 und US 6,091,194 bekannt ist.

Bei emissiven Anzeigen ist von Vorteil, dass sie ohne Beleuchtung lesbar sind und dass eine Farbwiedergabe leicht realisierbar ist. Nachteilig ist, dass emissive Anzeigen für die Wiedergabe der Bilddaten ständig Energie benötigen, auch dann, wenn sich die wiederzugebenden Bilddaten nicht ändern.

Sowohl bistabile als auch emissive Anzeigen können als Segment-Anzeigen, Passiv- oder Aktivmatrix ausgebildet sein, vergleiche hierzu US 2006/0240603 A1.

Sowohl bistabile als auch emissive Anzeigen sind in reflektiven und transparenten Ausführungsformen herstellbar, wie es an sich aus dem Stand der Technik bekannt ist.

Aus der zum Anmeldezeitpunkt unveröffentlichten Patentanmeldung DE 10 2006 031 422 derselben Anmelderin ist ein Wert- oder Sicherheitsdokument mit einer Anzeigevorrichtung bekannt, wobei die Anzeigevorrichtung zur Ausgabe eines maschinenlesbaren optischen Signals, welches durch einen Benutzer nicht kognitiv erfassbar ist, ausgebildet ist.

Aus der zum Anmeldezeitpunkt unveröffentlichten Patentanmeldung DE 10 2007 002 385 derselben Anmelderin ist ein Dokument mit einem optischen Sender bekannt. Der optische Sender kann als Anzeigevorrichtung ausgebildet sein, die zur Ausgabe eines maschinenlesbaren optischen Signals in einem visuell nicht wahrnehmbaren spektralen Bereich ausgebildet ist.

Aus der zum Anmeldezeitpunkt unveröffentlichten Patentanmeldung DE 10 2006 030 406 derselben Anmelderin ist ein Wert- oder Sicherheitsdokument mit zumindest zwei Anzeigevorrichtungen bekannt, wobei eine der Anzeigevorrichtungen so ausgebildet ist, dass sie auch dann Informationen anzeigt, wenn eine Schnittstelle des Dokuments von einer externen Energiequelle getrennt ist.

Aus der WO 03/054807 A2 ist ein blattförmiges Wertdokument, wie z. B. eine Banknote bekannt. Ein maschinell oder vom Menschen sicher nachprüfbares Echtheitsmerkmal, das zudem kopiertechnisch nicht tauschend nachgemacht werden kann, wird durch eine elektrooptische und / oder akustische Wiedergabeeinrichtungen realisiert, die im Wertdokument integriert ist.

Der Erfindung liegt demgegenüber die Aufgabe zugrunde, eine verbesserte Anzeigevorrichtung zur Wiedergabe von Daten, ein Dokument, insbesondere ein Wert- oder Sicherheitsdokument, mit einer solchen Anzeigevorrichtung und ein Verfahren zur Herstellung einer Anzeigevorrichtung zu schaffen.

Die der Erfindung zugrunde liegende Aufgabe wird jeweils mit den Merkmalen der unabhängigen Patentansprüche gelöst. Bevorzugte Ausführungsformen sind in den abhängigen Patentansprüchen angegeben.

Erfindungsgemäß wird ein Dokument mit einer integrierten Anzeigevorrichtung für Daten mit ersten und zweiten ansteuerbaren Anzeigeelementen geschaffen.

Unter Daten werden erfindungsgemäß beliebige optisch darstellbaren Informationsinhalte, z.B. Text, verschlüsselte oder unverschlüsselte numerische und alphanumerische Daten, Fotos, grafische Darstellungen, 1D-, 2D- und 3D-Barcode, biometrische Daten, kryptographische Schlüssel und dergleichen verstanden.

Die ersten Anzeigeelemente benötigen zur permanenten Wiedergabe der Daten keine Energieversorgung; bei den ersten Anzeigeelementen handelt es sich beispielsweise um so genannte bistabile Anzeigeelemente, die zwei oder mehrere stabile Zustände einnehmen können, in denen sie über längere Zeit ohne Zuführung von Energie verharren. Eine Zuführung von Energie ist lediglich für eine Änderung der angezeigten Daten notwendig, d.h. zum Wechseln in andere Zustände bzw, zum Wechseln von einem in einen anderen Zustand. Die zweiten Anzeigeelemente benötigen hingegen zur Wiedergabe der Daten eine Energieversorgung. Beispiels-weise handelt es sich bei den zweiten Anzeigeelementen um emissive Anzeigeelemente.

Die Anzeigevorrichtung hat Steuerungsmittel zur Ansteuerung der ersten und zweiten Anzeigeelemente für die Wiedergabe derselben Daten.

Erfindungsgemäß beinhaltet die Anzeigevorrichtung eine erste Anzeige, die die ersten ansteuerbaren Anzeigeelemente beinhaltet, und eine zweite Anzeige, die die zweiten ansteuerbaren Anzeigeelemente beinhaltet. Eine der ersten und zweiten Anzeigen ist reflektiv und die andere der ersten und zweiten Anzeigen ist transparent.

Gemäß einer Ausführungsform der Erfindung werden mit Hilfe der ersten und zweiten Anzeigeelemente dieselben Daten wiedergegeben, so lange eine Energieversorgung zur Verfügung steht. Dies hat den Vorteil, dass aufgrund beispielsweise der emissiven Anzeigeelemente die Wiedergabe der Daten auch ohne Umgebungsbeleuchtung visuell wahrnehmbar ist. Insbesondere kann diese Wiedergabe in Farbe erfolgen.

Steht hingegen eine solche Energieversorgung nicht zur Verfügung, so werden die Daten nicht mehr von den zweiten Anzeigeelementen wiedergegeben, sondern nur noch von den ersten Anzeigeelementen. Dies hat den Vorteil, dass auch dann, wenn keine Energieversorgung zur Verfügung steht, die Anzeigevorrichtung von einem Benutzer visuell gelesen werden kann.

Nach einer Ausführungsform der Erfindung sind die ersten Anzeigeelemente als bistabile Anzeigeelemente ausgebildet, insbesondere als elektrophoretische, elektrochrome, Drehelement, ferroelektrische Anzeigeelemente oder auf der Basis des Elektrowetting-Effekts. Die ersten Anzeigeelemente können auch als bistabile LCD-Anzeigeelemente ausgebildet sein, zum Beispiel als twisted nematic, super twisted nematic, cholesterische oder nematische LCD-Anzeigeelemente. Ferner können die ersten Anzeigeelemente verschiedene dieser Technologien miteinander kombinieren.

Gemäß einer Ausführungsform der Erfindung sind die ersten Anzeigeelemente Teil einer Hybridanzeige oder einer flexiblen Anzeige, insbesondere einer flexiblen Anzeige wie sie aus US 2006/0250534 A1 bekannt und von der Firma Citala kommerziell erhältlich ist.

Nach einer Ausführungsform der Erfindung handelt es sich bei den zweiten Anzeigeelementen um LED-Anzeigeelemente, insbesondere anorganische, organische oder Hybrid-LED-Anzeigeelemente. Die zweiten Anzeigeelemente können auch auf der Basis eines elektrolumineszierenden Mediums realisiert sein.

Nach einer Ausführungsform der Erfindung sind die zweiten Anzeigeelemente als transparente organische LED-Elemente ausgebildet.

Nach einer Ausführungsform der Erfindung hat die Anzeigevorrichtung eine Aktivmatrix zur Adressierung der ersten und zweiten Anzeigeelemente, wobei die Aktivmatrix transparent ausgebildet ist, und beispielsweise TFTs aufweist, die auf einem Zink-Zinn-Oxid- Halbleiter oder einem Zink-Indium-Zinn-Oxid-Halbleiter basieren.

Nach einer Ausführungsform der Erfindung sind die ersten und zweiten Anzeigen übereinander oder nebeneinander angeordnet.

Nach einer Ausführungsform der Erfindung sind die ersten und zweiten Anzeigeelemente paarweise mit oder ohne Versatz übereinander oder nebeneinander angeordnet.

Nach einer Ausführungsform der Erfindung handelt es sich bei den ersten und zweiten Anzeigeelementen um Anzeigesegmente oder die ersten und zweiten Anzeigeelemente sind jeweils matrixförmig angeordnet.

Nach einer Ausführungsform der Erfindung haben die ersten und zweiten Anzeigeelemente eine gemeinsame Steuerelektrode. Dies hat den Vorteil, dass hierdurch eine besonders flache Ausführung der Anzeigevorrichtung realisierbar ist. Bei der Herstellung der Anzeigevorrichtung ergibt sich als weiterer Vorteil, dass eine präzise nachträgliche Ausrichtung der ersten und zweiten Anzeigeelemente nicht erforderlich ist, da sich eine solche Ausrichtung inhärent durch den Herstellungsprozess ergibt, beispielsweise durch Strukturierung der Steuerelektrode und die nachfolgende Aufbringung weiterer Schichten zur Realisierung der zweiten Anzeigeelemente.

Gemäß einer Ausführungsform der Erfindung hat die Anzeigevorrichtung eine Aktivmatrix, wobei Aktivierungsschaltungen zur paarweisen Ansteuerung von ersten und zweiten Anzeigeelementen vorgesehen sind.

Nach einer Ausführungsform der Erfindung hat die Anzeigevorrichtung einen mehrschichtigen Aufbau, wobei die Aktivierungsmatrix und die Aktivierungsschaltung in einer oder mehreren Schichten realisiert sind, die sich zwischen den ersten und zweiten Anzeigeelementen befinden. Diese Schichten können in Dünnschicht- oder Drucktechnik direkt aufgebracht sein. Die Dicke der Schichten für die Realisierung der Aktivmatrix und der Aktivierungsschaltungen kann maximal 5 µm, insbesondere höchstens 2 µm betragen.

Nach einer Ausführungsform der Erfindung hat die Anzeigevorrichtung einen ersten Bereich, in dem die ersten und zweiten Anzeigeelemente übereinander angeordnet sind, sowie einen zweiten Bereich, in dem nur zweite Anzeigeelemente vorhanden sind.

Nach einer Ausführungsform der Erfindung sind die Steuerungsmittel zur Ansteuerung der in dem zweiten Bereich befindlichen zweiten Anzeigeelemente zur Kommunikation mit einem externen Lesegerät ausgebildet. Insbesondere können die zweiten Anzeigelemente in dem zweiten Bereich zur Kommunikation mit einem Lesegerät zur Aussendung eines kognitiv und/oder visuell durch einen Benutzer nicht wahrnehmbaren Signals von den Steuerungsmitteln angesteuert werden.

Nach Ausführungsformen der Erfindung handelt es sich bei dem Dokument zum Beispiel um ein Ausweisdokument, wie zum Beispiel einen Reisepass, Personalausweis, Führerschein, Firmenausweis oder ein anderes ID-Dokument, einen Berechtigungsnachweis, ein Zahlungsmittel, wie zum Beispiel eine Kreditkarte, oder dergleichen. Insbesondere kann das Dokument Papier- und oder Kunststoff-basiert oder als Chipkarte ausgebildet sein.

Nach einer Ausführungsform der Erfindung hat das Dokument einen nichtflüchtigen elektronischen Speicher, in dem die Daten gespeichert sind. Bei den Daten handelt es sich zum Beispiel um persönliche Angaben zu dem Träger des Dokuments, ein Gesichtsbild, Fingerabdruckdaten und/oder andere biometrische Daten.

In einem weiteren Aspekt betrifft die Erfindung ein Verfahren zur Herstellung eines Dokuments mit einer Anzeigevorrichtung mit folgenden Schritten: Zurverfügungstellung zumindest einer ersten Schicht, wobei die erste Schicht erste ansteuerbare Anzeigeelemente beinhaltet, die zur Wiedergabe von Daten keine Energieversorgung benötigen, Aufbringung zumindest einer zweiten Schicht auf die erste Schicht, wobei die zweite Schicht Aktivierungsschaltungen beinhaltet, Aufbringung zumindest einer dritten Schicht auf die zweite Schicht, wobei die dritte Schicht zweite ansteuerbare Anzeigeelemente beinhaltet, die zur Wiedergabe von Daten eine Energieversorgung benötigen, wobei die Aktivierungsschaltungen zur Ansteuerung der ersten und zweiten Anzeigeelemente ausgebildet sind, wobei die Anzeigevorrichtung in einen Dokumentenkörper integriert wird.

Im Weiteren werden Ausführungsformen der Erfindung mit Bezugnahme auf die Zeichnungen näher erläutert. Es zeigen:
- Figur 1: ein Blockdiagramm einer Ausführungsform einer erfindungsgemäßen Anzeigevorrichtung,
- Figur 2: eine schematische Schnittansicht einer weiteren Ausführungsform einer erfindungsgemäßen Anzeigevorrichtung,
- Figur 3: eine weitere Ausführungsform einer erfindungsgemäßen Anzeigevorrichtung,

- Figur 4: eine schematische Schnittansicht einer weiteren Ausführungsform einer erfindungsgemäßen Anzeigevorrichtung,
- Figur 5: eine schematische perspektivische Darstellung einer weiteren Ausführungsform einer erfindungsgemäßen Anzeigevorrichtung,
- Figur 6: eine Aktivmatrix mit Aktivierungsschaltungen zur paarweisen Ansteuerung der ersten und zweiten Anzeigeelemente,
- Figur 7: eine erste Ausführungsform für eine Aktivierungsschaltung der Figur 6,
- Figur 8: eine zweite Ausführungsform für eine Aktivierungsschaltung der Figur 6,
- Figur 9: eine schematische Schnittansicht einer weiteren Ausführungsform einer erfindungsgemäßen Anzeigevorrichtung,
- Figur 10: eine schematische Schnittansicht einer weiteren Ausführungsform einer erfindungsgemäßen Anzeigevorrichtung,
- Figur 11: ein Blockdiagramm einer Ausführungsform eines erfindungsgemäßen Dokuments,
- Figur 12: ein Blockdiagramm einer weiteren Ausführungsform eines erfindungsgemäßen Dokuments mit einem dazugehörigen Lesegerät.

Im Weiteren werden einander entsprechende Elemente der nachfolgenden Figuren mit gleichen Bezugszeichen gekennzeichnet.

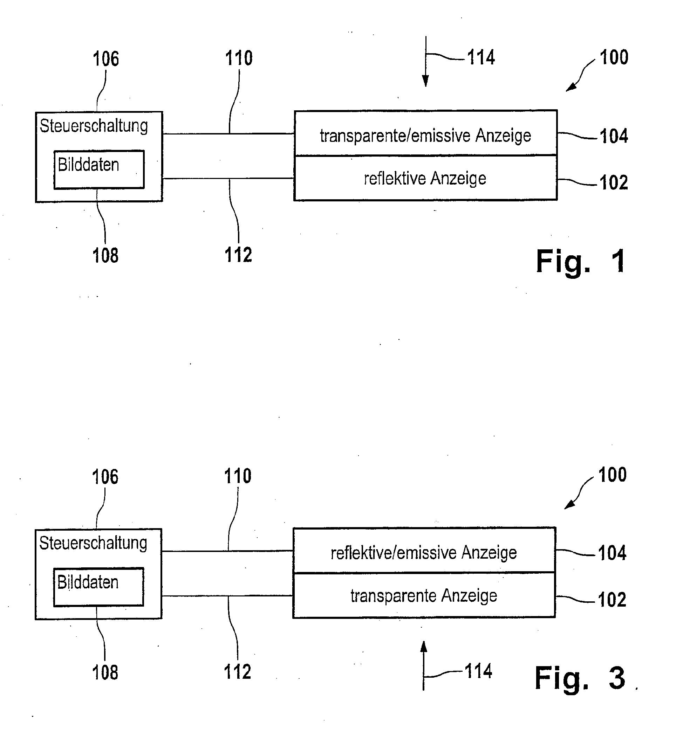

Die Figur 1 zeigt eine Anzeigevorrichtung 100, die eine erste Anzeige 102 und eine auf der Anzeige 102 angeordnete Anzeige 104 aufweist. Die Anzeige 102 ist reflektiv und ist beispielsweise als EPD mit bistabilen ersten Anzeigeelementen ausgebildet. Die Anzeigen 102 und 104 sind vorzugsweise so angeordnet, dass die jeweiligen Widergaben derselben Daten deckungsgleich sind.

Die Anzeige 104 ist als transparente und emissive Anzeige ausgebildet, wie zum Beispiel als LED-Anzeige, insbesondere als organische LED-Anzeige. Beispielsweise kann die Anzeige 104 als transparente OLED-Anzeige ausgebildet sein. Insbesondere kann es sich bei den zweiten Anzeigeelementen der Anzeige 104 um transparente OLED-Bildelemente handeln. Die Anzeige 104 kann ferner eine ebenfalls transparente Aktivmatrix beinhalten.

Die Anzeigevorrichtung 100 hat eine Steuerschaltung 106 mit einem elektronischen Speicher für Daten 108. Die Steuerschaltung 106 ist über eine Leitung 110 mit einer Steuerelektrode der Anzeige 104 und über eine Leitung 112 mit einer Steuerelektrode der Anzeige 102 verbunden. Die Steuerschaltung 106 ist so ausgebildet, dass die beiden Anzeigen 102 und 104 zur Wiedergabe derselben Daten 108 über die Leitungen 110 bzw. 112 angesteuert werden. Die Gegenelektroden der Anzeigevorrichtungen 102 und 104 sowie deren Ansteuerleitungen sind zur Vereinfachung nicht dargestellt. Die Ansteuerleitungen 110 und 112 fallen in einer bevorzugten Ausführungsform zusammen.

Wenn eine Energieversorgung für die Anzeigen 102, 104 sowie die Steuerschaltung 106 zur Verfügung steht, so werden also über die Anzeigen 102 und 104 dieselben Daten 108 wiedergegeben, die vorzugsweise im Wesentlichen einander deckungsgleich sind, sodass für einen Beobachter aus der Blickrichtung 114 visuell der Eindruck einer einzigen Wiedergabe der Daten 108 resultiert.

Hierbei kann beispielsweise die Anzeige 104 zur farbigen Wiedergabe der Daten 108 ausgebildet sein, wohingegen die Anzeige 102 zur schwarzweißen Wiedergabe der Daten 108 ausgebildet ist, sodass sich die farbige und die schwarzweiße Wiedergabe überlagern. Da die Anzeige 104 emissiv ausgebildet ist, kann die Wiedergabe der Daten 108 auch ohne externe Beleuchtung betrachtet werden.

Wenn keine Energieversorgung zur Verfügung steht, werden die Steuerschaltung 106 und die Anzeige 104 deaktiviert, sodass die Steuerschaltung 106 die Anzeigen 102 und 104 nicht mehr ansteuern kann. Die Anzeige 104 gibt dann keine Daten wieder, wohingegen die Anzeige 102 weiterhin die Daten 108 wiedergibt. Die Anzeige 102 bzw. deren Anzeigeelemente verharren also in deren zuletzt eingenommenem Zustand, den sie aufgrund der zuvorigen Ansteuerung durch die Steuerschaltung 106 eingenommen hatten. Da die Anzeige 104 transparent ist, kann ein Benutzer die Wiedergabe der Daten auf der Anzeige 102 durch die Anzeige 104 hindurch betrachten.

Die Anzeigevorrichtung 100 ist also besonders vorteilhaft, da sie die Vorteile der bistabilen Anzeige 102 mit den Vorteilen der emissiven Anzeige 104 kombiniert.

Durch die Anzeigevorrichtung 100 kann ein Dokument gebildet werden. Alternativ ist die Anzeigevorrichtung 100 in einen Dokumentenkörper integriert, wobei der Dokumentenkörper aus Papier und/oder Kunststoff bestehen kann. Insbesondere kann der Dokumentenkörper einen Schichtaufbau haben.

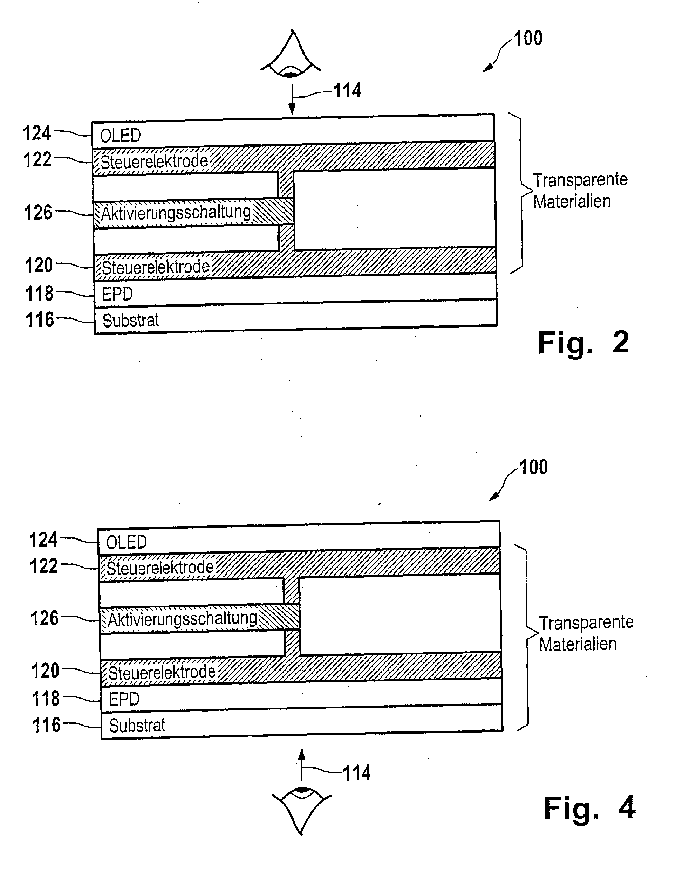

Die Figur 2 zeigt einen Schichtaufbau einer solchen Anzeigevorrichtung 100. In der hier betrachteten Ausführungsform ist die Anzeige 102 durch die Schichten 116, 118 und 120 realisiert. Bei der Schicht 116 handelt es sich um ein Substrat, auf dem die ersten ansteuerbaren Anzeigeelemente der Schicht 118 angeordnet sind, bei denen es sich beispielsweise um EPD-Anzeigeelemente handeln kann. Auf der Schicht 118 befindet sich die Schicht 120, die die Steuerelektrode für die ersten Anzeigeelemente der Schicht 118 beinhaltet.

Die zweite Anzeige 104 ist hier durch eine Schicht 122 und eine Schicht 124 realisiert. Die Schicht 124 beinhaltet die zweiten Anzeigeelemente, die beispielsweise als transparente OLED-Pixel ausgebildet sein können. Die Schicht 122 beinhaltet die Steuerelektrode für die OLED-Pixel der Schicht 124. Zwischen den Schichten 120 und 122 können sich eine oder mehrere weitere Schichten befinden, insbesondere eine Schicht 126 zur Realisierung einer Aktivierungsschaltung für die Ansteuerung der ersten und zweiten Anzeigeelemente über die Steuerelektrode der Schicht 120 bzw. überdie Steuerelektrode der Schicht 122.

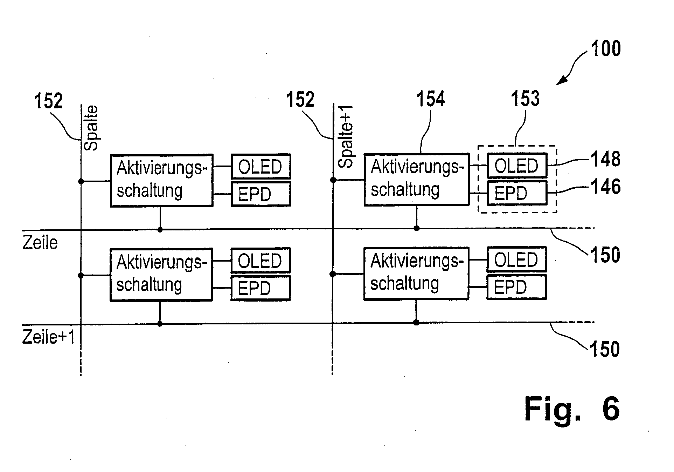

Beispielsweise handelt es sich bei den Anzeigen 102 und 104 um Aktivmatrixanzeigen, wobei jeweils eine Aktivierungsschaltung für einander entsprechende erste und zweite Anzeigeelemente der Anzeigen 102 und 104 vorgesehen sind, wie mit Bezugnahme auf die Figur 6 weiter unten näher erläutert.

Die Schichten 120, 126, 122 und 124 sind mit Hilfe von transparenten Materialien realisiert, sodass die darunter liegende Schicht 118 aus der Blickrichtung 114 sichtbar ist.

Die Figur 3 zeigt eine alternative Ausführungsform der Anzeigevorrichtung 100. Im Unterschied zu der Ausführungsform der Figur 1 ist hier die Anzeige 102 in Blickrichtung 114 vor der Anzeige 104 angeordnet. Ferner ist die bistabile Anzeige 102 transparent ausgebildet, wohingegen die emissive Anzeige 104 reflektiv ist.

Wenn also eine Energieversorgung zur Verfügung steht, betrachtet der Benutzer die Wiedergabe der Anzeige 104 durch die transparente Anzeige 102 hindurch, wobei sich die Wiedergaben der Anzeige 102 und 104 überlagern. Wenn hingegen keine Energieversorgung zur Verfügung steht, verbleibt die bistabile Anzeige 102 in ihrem zuletzt eingenommenen Zustand.

Die Figur 4 zeigt einen entsprechenden Schichtaufbau, wobei hier die Schichten 116, 118, 120, 126 und 122 transparent ausgeführt sind, sodass ein Benutzer aus der Blickrichtung 114 die von den zweiten Anzeigeelemente der Schicht 124 erzeugte Wiedergabe der Daten durch diese transparenten Schichten hindurch betrachten kann.

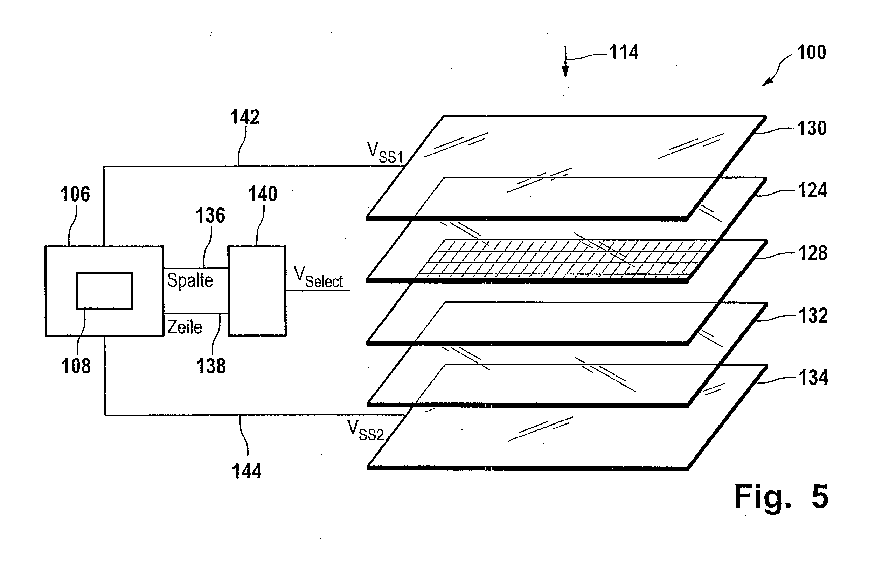

Die Figur 5 zeigt eine schematische perspektivische Darstellung einer Ausführungsform der Anzeigevorrichtung 100. Bei dieser Ausführungsform haben die Anzeigen 102 und 104 eine gemeinsame strukturierte Steuerelektrode, die durch eine Schicht 128 gebildet wird. Auf der Schicht 128 befindet sich eine Schicht 124, die die emissiven Anzeigeelemente der Anzeige 104 beinhaltet. Hierbei kann es sich zum Beispiel um transparente OLED-Pixel handeln. Auf der Schicht 124 befindet sich eine Schicht 130, durch die eine Gegenelektrode der Anzeige 104 gebildet wird. Die Schicht 130 ist ebenfalls transparent. Der Spannungswert, der an der Schicht 130 anliegt wird als V_{SS1} bezeichnet.

Unter der Schicht 128 befindet sich eine Schicht 132, die die Anzeigeelemente der Anzeige 102 beinhaltet. Hierbei kann es sich zum Beispiel um elektrophoretische Anzeigeelemente handeln. Unterhalb der Schicht 132 befindet sich eine Schicht 134, durch die die Gegenelektrode der Anzeige 102 gebildet wird. Diese Schicht 134 kann reflektiv ausgebildet sein. Der Spannungswert, der an der Schicht 134 anliegt wird als V_{SS2} bezeichnet.

Aus der in Figur 5 gezeigten Blickrichtung 114 kann also ein Beobachter visuell sowohl die durch die Anzeige 102 als auch die Anzeige 104 erzeugten Wiedergaben betrachten, die sich einander überlagern. Dabei sind die Anzeigeelemente in den Schichten 124 und 118 in der Blickrichtung 114 beispielsweise im Wesentlichen übereinander angeordnet, sodass die von den Anzeigen 102 und 104 erzeugten Bildwiedergaben keinen oder nur einen geringen Versatz aufweisen.

Die Steuerschaltung 106 ist hier zur Generierung eines Spaltensignals 136 und eines Zeilensignals 138 ausgebildet, um die einzelnen Anzeigeelemente der Anzeigen 102 und 104 anzusteuern. Die Spalten- und Zeilensignale 136, 138 werden von einer Treiberschaltung 140 empfangen und decodiert. Auf dieser Basis generiert die Treiberschaltung 140 Steuerspannungen Vselect, um die Anzeigeelemente Ober die strukturierte Steuerelektrode der Schicht 128 zur Wiedergabe der Daten 108 anzusteuern. Dabei ist eine Ausführungsform als Segmentanzeige oder als Passiv- oder Aktivmatrixanzeige möglich.

Neben der Generierung der Steuerspannungen Vselect über die Treiberschaltung 140 dient die Steuerschaltung 106 auch zum Anlegen der jeweiligen Gegenspannungen an die Gegenelektroden der Schicht 130 bzw. 134. Diese Spannungen können unterschiedlich groß sein, insbesondere wenn die Anzeige 102 beispielsweise als elektrophoretische Anzeige ausgebildet ist, die im Allgemeinen eine relativ hohe Spannung bei geringem Strombedarf benötigt, wenn eine Änderung der Wiedergabe erfolgen soll, und wenn die Anzeige 104 als OLED-Anzeige ausgebildet ist, die im Allgemeinen einen relativ geringen Spannungs- und dafür einen höheren Strombedarf hat. Die über die Leitung 142 von der Steuerschaltung 106 an die Gegenelektrode der Schicht 130 angelegte Spannung und die über die Leitung 144 an die Gegenelektrode der Schicht 134 angelegte Spannung sind nach dem jeweiligen Spannungsbedarf der verwendeten Anzeigeelemente gewählt.

Die Figur 6 zeigt ein schematisches Blockdiagramm einer Ausführungsform der Anzeigevorrichtung 100 als Aktivmatrixanzeige. Die Anzeigevorrichtung beinhaltet übereinander oder unmittelbar nebeneinander angeordnete erste Anzeigeelemente 146 und zweite ansteuerbare Anzeigeelemente 148. In der hier betrachteten Ausführungsform sind die Anzeigeelemente 146 als EPD-Anzeigeelemente und die Anzeigeelemente 148 als OLED-Anzeigeelemente, insbesondere transparente OLED-Anzeigeelemente ausgebildet. Die Anzeigeelemente 146 und 148 sind jeweils paarweise einander zugeordnet.

Die aus jeweils einem Anzeigeelement 146 und einem Anzeigeelement 148 bestehenden Paare 153 sind in einer Matrix angeordnet, die Zeilenleitungen 150 und Spaltenleitungen 152 aufweist, sodass jedes Paar 153 von Anzeigeelementen 146, 148 von der Treiberschaltung 140 (vergleiche Figur 5) angesteuert werden kann. Die Ansteuerung eines Paars 153 von Anzeigeelementen 148, 146 erfolgt über eine gemeinsame Aktivierungsschaltung 154, die jeweils mit einer der Zeilenleitungen 150 und einer der Spaltenleitungen 152 verbunden ist.

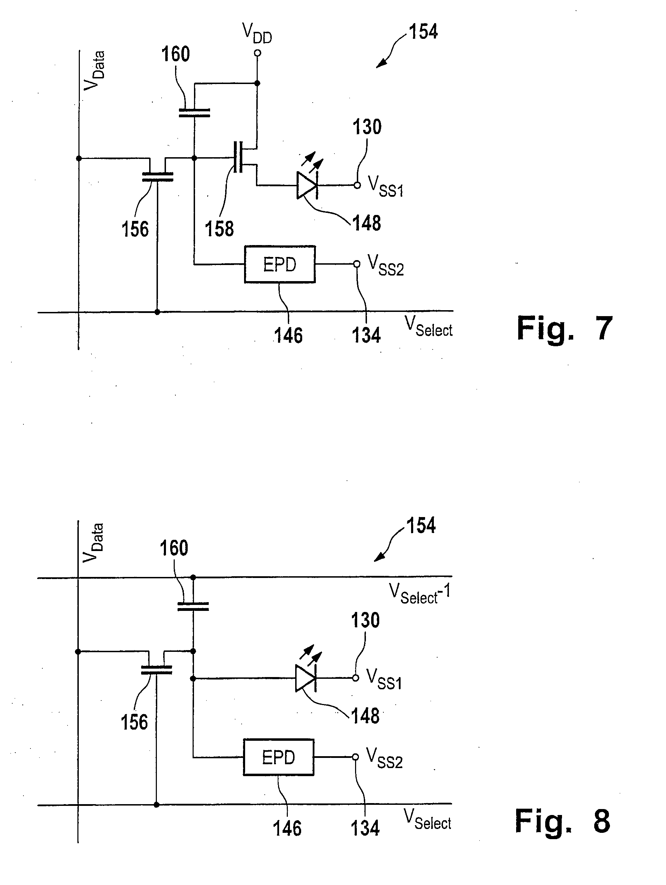

Die Figur 7 zeigt eine Ausführungsform für eine solche Aktivierungsschaltung 154. Bei der Ausführungsform der Aktivierungsschaltung 154 gemäß Figur 7 handelt es sich um eine Ausführungsform mit zwei Transistoren 156 und 158, die zum Beispiel als TFTs ausgebildet sein können, insbesondere auf ZTO-Basis. Die Aktivierungsschaltung 154 hat einen Speicherkondensator 160 zur Speicherung einer Ladung, der mit einer Betriebsspannung V_{DD} verbunden ist. In jedem Refresh-Intervall wird das Paar 153 von Anzeigeelementen 146, 148 der Aktivierungsschaltung 154 durch die Steuerschaltung 106 (vgl. Fig. 1, 3 und 5) selektiert, sodass die Spannung Vselect an dem Gate des Transistors 156 anliegt, um diesen durchzuschalten. Der Speicherkondensator 160 wird dann aufgrund des an dem Transistor 156 anliegenden Datensignals Vdata auf einen Spannungswert geladen, der entweder logisch 0 oder logisch 1 entspricht, je nachdem welche Daten wiederzugeben sind.

Die Figur 8 zeigt eine alternative Ausführungsform der Aktivierungsschaltung 154 mit nur einem Transistor 156. Im Unterschied zu der Ausführungsform der Figur 7 ist hier der Speicherkondensator 160 nicht mit der Betriebsspannung V_{DD} verbunden, sondern mit der der Steuerspannung Vselect komplementären Steuerspannung Vselect-1.

Die Transistoren der Aktivierungsschaltungen 154 in den Ausführungsformen der Figuren 7 und 8 können als Dünnschichttransistoren in Abhängigkeit von der Prozesswahl in "bottom gate" oder "top gate"-Architektur aufgebaut sein.

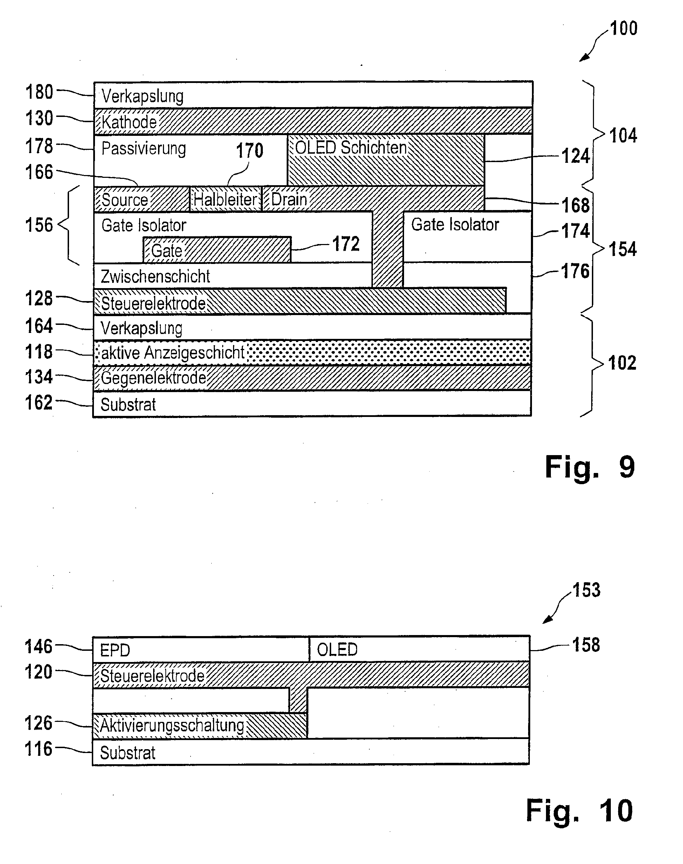

Die Figur 9 zeigt einen schematischen Querschnitt einer weiteren Ausführungsform der Anzeigevorrichtung 100. Bei dieser Ausführungsform dient die Anzeige 102, die zum Beispiel als EPD-Anzeige ausgebildet ist, als Trägersubstrat. Die Anzeige 102 hat ein Substrat 162, auf dem sich die Schicht 134 mit der Gegenelektrode und die Schicht 118 mit den Anzeigeelementen 146 (vergleiche Figuren 6, 7 und 8) befindet. Auf der Schicht 118 kann sich eine Schicht 164 zur Verkapselung der Anzeige 102 befinden.

Die Ansteuerung der Anzeigeelemente 146 der Schicht 118 erfolgt über die Steuerelektrode der Schicht 128. Diese Steuerelektrode dient auch zur Ansteuerung des Transistors 156 der Aktivierungsschaltung 154, der einen Source-Bereich 166, einen Drain-Bereich 168 und einen dazwischen befindlichen Halbleiter-Bereich 170 aufweist. Der Transistor 156 hat ferner einen Gate-Bereich 172, der über Gate-Isolator 174 sowie über eine optionale Zwischenschicht 176 von dem Source-Bereich 166 und dem Drain-Bereich 168 elektrisch isoliert ist.

Der Drain-Bereich 168 kontaktiert hier mit der Steuerelektrode. Aufgrund dieser Kontaktierung kann über die Steuerelektrode ein Datenwert in den Speicherkondensator 160 (vergleiche Figuren 7 und 8), der in der Figur 9 nicht gezeigt ist, geschrieben werden. An einer anderen Stelle des Querschnitts (in der Figur 9 nicht gezeigt) kontaktiert die strukturierte Steuerelektrode den Gate-Bereich 172, um den Transistor 156 bei entsprechender Ansteuerung durchzuschalten.

Auf den Schichten, die den Transistor 156 bilden, befinden sich ein oder mehrere Schichten 124, die die OLED-Anzeigeelemente 148 beinhalten sowie eine Passivierungsschicht 178. Auf der Schicht 130, durch die die Kathode gebildet wird, befindet sich eine Schicht 180 zur Verkapselung der Anzeigevorrichtung 100.

Eine oder mehrere der Schichten, die auf die Anzeige 102 aufgebracht werden, können in Dünnschicht- oder Drucktechnik direkt aufgebracht werden. Dadurch ist es möglich, dass die für die Realisierung der Ansteuerung erforderlichen Schichten eine Gesamtdicke von weniger als 5 µm, insbesondere weniger als 2 µm aufweisen. Dies ermöglicht es, ein sehr dünnes Kombi-Display mit zwei verschiedenen Anzeigen 102, 104 zu schaffen, ohne dass ein zusätzliches Substrat für die Steuerelektronik erforderlich wäre. Weiterhin entfällt ein aufwendiger Durchkontaktierungsprozess durch ein ansonsten erforderliches zusätzliches verhältnismäßig dickes Substrat.

Die Herstellung der Anzeigevorrichtung in der Ausführungsform der Figur 9 kann beispielsweise mit den folgenden Schritten erfolgen:
1. Die Anzeigevorrichtung 102, die insbesondere als EPD-Anzeige ausgebildet sein kann, wird als Träger zur Verfügung gestellt.
2. Zur Realisierung der Steuerelektrode der Schicht 128 wird eine Metallisierung aufgebracht. Diese wird strukturiert, um so die Steuerelektrode zu schaffen. Die Metallisierung und Strukturierung kann mit Hilfe von Physical Vapor Deposition (PVD) und Fotolithografie (FL) erfolgen. Ein hierzu geeignetes Material ist zum Beispiel Indium-Zinn-Oxid (ITO), da es sich hierbei um ein transparentes Material handelt.
3. Die Zwischenschicht 176 kann mittels Spin Coating (SC), Siebdruck (SD) oder einer anderen Technik aufgetragen werden. Sie kann mit Hilfe von FL strukturiert werden.
4. Die Gate-Bereiche 172 können mittels PVD und FL oder direkter Strukturierung mittels Tintenstrahl (Inkjet)-Drucken (IJ) aufgebracht werden.
5. Der Gate-Isolator 174 kann mittels SC, SD oder einer anderen Technik aufgetragen werden. Er kann mit Hilfe von FL strukturiert werden.
6. Die Source-Bereiche 166 und die Draln-Bereiche 178 sowie die Durchkontaktierungen mit der Steuerelektrode können in einem Schritt mittels IJ, SD oder einer anderen Technik aufgebracht werden.
7. Die Halbleiter-Bereiche 170 können mittels direkter Strukturierung durch IJ oder oder einer anderen Technik aufgebracht werden.
8. Die isolierende Passivierung 178 kann mittels SC, SD oder einer anderen Technik aufgetragen werden. Sie kann mit Hilfe von FL strukturiert werden.
9. Die Schichten 124, die die OLED-Anzeigeelemente 148 beinhalten, können mittels PVD, IJ oder einer anderen Technik aufgebracht werden.
10. Die Schicht 130 kann durch Metallisierung mit PVD und je nach Ausführungsform erforderlichenfalls mittels FL oder einer anderen Technik hergestellt werden.
11. Die Schicht 180 kann zur Verkapselung der Anzeigevorrichtung 100 mittels PVD, SC, SD oder einem anderen Verfahren hergestellt werden.

Die Figur 10 zeigt einen schematischen Querschnitt durch ein einzelnes Paar von Anzeigeelementen 146 und 148 einer weiteren Ausführungsform der Anzeigevorrichtung 100. Bei dieser Ausführungsform sind die Anzeigeelemente 146, 158 paarweise nebeneinander angeordnet.

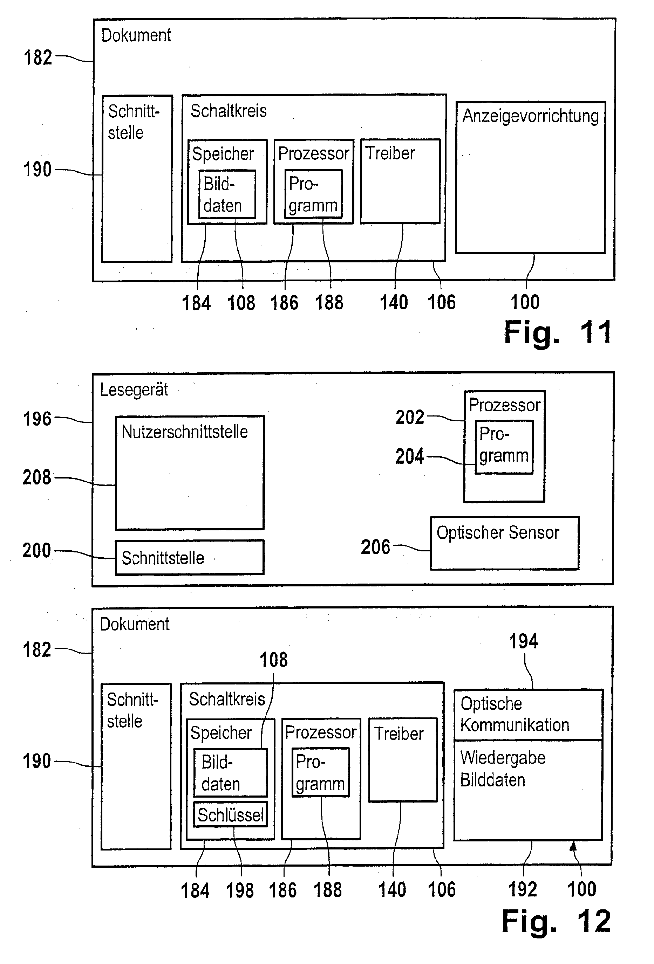

Die Figur 11 zeigt eine Ausführungsform eines erfindungsgemäßen Dokuments 182. Bei dem Dokument 182 kann es sich um ein Wert- oder um ein Sicherheitsdokument handeln, wie zum Beispiel ein ID-Dokument, Reisepass, Personalausweis, Führerschein, Mitarbeiterausweis, Mitgliedsausweis, eine Signaturkarte, ein Zahlungsmittel, einen Berechtigungsnachweis oder dergleichen. Das Dokument 182 hat einen Dokumentenkörper, in den die Anzeigevorrichtung 100, der Schaltkreis 106 und/oder die Schnittstelle 190 integriert sein können. Der Dokumentenkörper kann Papier- und/oder Kunststoff-basiert oder in Form einer Chipkarte ausgebildet sein.

Das Dokument 182 beinhaltet eine Ausführungsform einer erfindungsgemäßen Anzeigevorrichtung 100, wobei die Steuerschaltung 106 hier als integrierter elektronischer Schaltkreis realisiert ist. Die Steuerschaltung 106 hat einen elektronischen Speicher 184 für die Daten 108, einen Prozessor 186 zur Ausführung von Programminstruktionen 188 sowie eine Treiberschaltung 140.

Das Dokument 182 hat ferner eine Schnittstelle 190, die kontaktlos, kontaktbehaftet oder als Dual-Mode-Interface ausgebildet sein kann. Insbesondere kann die Schnittstelle 190 als RFID-Schnittstelle ausgebildet sein. Über die Schnittstelle 190 kann das Dokument 182 und insbesondere der Schaltkreis 106 mit elektrischer Energie versorgt werden. Sobald dies der Fall ist, startet der Prozessor 186 die Ausführung der Programminstruktionen 188, sodass die Daten 108 aus dem Speicher 184 gelesen werden.

Der Treiber 140 wird von dem Prozessor 186 dann so angesteuert, dass die Daten über die Anzeigen 102 und 104 (vergleiche zum Beispiel Figuren 1 und 3) wiedergegeben werden. Nachdem die Energieversorgung nicht mehr zur Verfügung steht, verbleibt die Anzeige 102 in ihrem zuletzt eingenommenen Zustand, sodass deren Wiedergabe auch weiterhin sichtbar bleibt. Dies ist insbesondere vorteilhaft für die Kontrolle von Ausweisdokumenten, da eine Sichtkontrolle auch dann vorgenommen werden kann, wenn kein Lesegerät zur Energieversorgung des Dokuments zur Verfügung steht.

Die Figur 12 zeigt eine weitere Ausführungsform des Dokuments 182, wobei hier die Anzeigevorrichtung 100 einen ersten Bereich 192 für die Wiedergabe von Daten und einen zweiten Bereich 194 zur optischen Kommunikation mit einem Lesegerät 196 aufweist. Der Bereich 192 kann dabei gemäß einer der Ausführungsformen der Figuren 1 bis 11 ausgebildet sein. In dem Bereich 194 befinden sich dagegen nur Anzeigeelemente einer der beiden Anzeigen 102, 104, vorzugsweise Anzeigeelemente 148 der emissiven Anzeige 104.

In dem elektronischen Speicher 184 ist zum Beispiel ein kryptographischer Schlüssel 198 gespeichert, wie zum Beispiel ein symmetrischer Schlüssel oder ein asymmetrisches Schlüsselpaar. Die Programminstruktionen 188 sind zusätzlich zur Ausführung der das Dokument 182 betreffenden Schritte eines kryptographischen Protokolls ausgebildet.

In einer weiteren Ausführungsform ist der Schlüssel 198 nicht permanent gespeichert, sondern wird zur einmaligen Verwendung generiert. Besonders bevorzugt wird dieser generierte Schlüssel 198 über das Displayelement zur optischen Kommunikation 198 an das Lesegerät 196 übertragen, welches dieses zur Verschlüsselung der Kommunikation über die Schnittstellen 200 und 190 verwendet.

Das Lesegerät 196 hat eine Schnittstelle 200, die der Schnittstelle 190 entspricht. Über die Schnittstelle 200 kann das Lesegerät 196 Energie in die Schnittstelle 190 zur Energieversorgung des Dokuments 182 einkoppeln. Das Lesegerät 196 hat ferner einen Prozessor 202 zur Ausführung von Programminstruktionen 204. Die Programminstruktionen 204 sind zur Ausführung der das Lesegerät 196 betreffenden Schritte des kryptographischen Protokolls ausgebildet. Das Lesegerät 196 verfügt ferner über einen optischen Sensor 206 zum Empfang der in dem Bereich 194 der Anzeigevorrichtung 100 abgestrahlten optischen Signale.

Das Lesegerät 196 hat ferner eine Nutzer-Schnittstelle 208, die zum Beispiel eine Anzeige beinhalten kann.

Im Betrieb wird elektrische Energie von der Schnittstelle 200 in die Schnittstelle 190 des Dokuments 182 eingekoppelt, zum Beispiel kontaktlos über eine elektromagnetische Kopplung. Daraufhin wird die Ausführung der Programminstruktionen 188 gestartet.

Die Programminstruktionen 188 greifen auf den kryptographischen Schlüssel 198 zu, um das kryptographische Protokoll abzuarbeiten. Hierbei kann es sich z.B. um ein Challenge-Response Protokoll handeln. Die hierzu erforderliche Kommunikation mit dem Lesegerät 196 erfolgt mit Hilfe optischer Signalübertragung von dem Bereich 194 der Anzeigevorrichtung 100 an den optischen Sensor 206.

Wenn als Ergebnis der Abarbeitung des kryptographischen Protokolls die Ausführung der Programminstruktionen 204 das Ergebnis hat, dass das Dokument 182 authentisch ist, kann beispielsweise ein Steuersignal von der Schnittstelle 200 an die Schnittstelle 190 übertragen werden, woraufhin die Programminstruktionen die Daten 108 auslesen und die Treiberschaltung 140 zur Wiedergabe dieser Daten in dem Bereich 192 ansteuern. Hierbei kann es sich auch um eine Sequenz von Daten handeln, die schutzbedürftige biometrische Informationen beinhalten, wie z.B. Gesichtsbilder aus unterschiedlichen Ansichten, gefolgt von Abbildungen von ein oder mehreren Fingerabdrücken.

Das Dokument 182 kann einen Pufferspeicher für die elektrische Energieversorgung beinhalten, sodass bei Unterbrechung der Energieversorgung durch das Lesegerät 196 genügend elektrische Energie in dem Dokument 182 zur Verfügung steht, sodass die Anzeige 102 nach der Unterbrechung der Energieversorgung zur Wiedergabe eines nicht schutzbedürftigen Bildinhaltes angesteuert wird, wie zum Beispiel eines Gesichtsbildes.

### Bezugszeichenliste

- 100: Anzeigevorrichtung
- 102: Anzeige
- 104: Anzeige
- 106: Steuerschaltung
- 108: Daten
- 110: Leitung
- 112: Leitung
- 114: Blickrichtung
- 116: Schicht
- 118: Schicht
- 120: Schicht
- 122: Schicht
- 124: Schicht
- 126: Schicht
- 128: Schicht
- 130: Schicht
- 134: Schicht
- 136: Spaltensignal
- 138: Zeilensignal
- 140: Treiberschaltung
- 142: Leitung
- 144: Leitung
- 146: Anzeigeelement
- 148: Anzeigeelement
- 150: Zeilenleitung
- 152: Spaltenleitung
- 153: Paar
- 154: Aktivierungsschaltung
- 156: Transistor
- 158: Transistor
- 160: Speicherkondensator
- 162: Substrat
- 164: Schicht
- 166: Source-Bereich
- 168: Drain-Bereich
- 170: Halbleiter-Bereich
- 172: Gate-Bereich
- 174: Gate-Isolator
- 176: Zwischenschicht
- 178: Passivierung
- 180: Schicht
- 182: Dokument
- 184: Speicher
- 186: Prozessor
- 188: Programminstruktionen
- 190: Schnittstelle
- 192: Bereich
- 194: Bereich
- 196: Lesegerät
- 198: kryptographischer Schlüssel
- 200: Schnittstelle
- 202: Prozessor
- 204: Programminstruktionen
- 206: Sensor
- 208: Nutzer-Schnittstelle

## Patentansprüche

1. Dokument, insbesondere Wert- oder Sicherheitsdokument, mit einer Anzeigevorrichtung (100), wobei die Anzeigevorrichtung erste ansteuerbare Anzeigeelemente (102; 146), die zur Wiedergabe von Daten keine Energieversorgung benötigen, und zweite ansteuerbare Anzeigeelemente (104; 148), die zur Wiedergabe der Daten eine Energieversorgung benötigen, aufweist, und mit Steuerungsmitteln (106) zur Ansteuerung der ersten und zweiten Anzeigeelemente für die Wiedergabe derselben Daten, **dadurch gekennzeichnet, dass** die ersten Anzeigeelemente zu einer ersten Anzeige (102) und die zweiten Anzeigeelemente zu einer zweiten Anzeige (104) gehören, wobei die ersten und zweiten Anzeigen übereinander angeordnet sind, und wobei eine der ersten und zweiten Anzeigen reflektiv und die andere der ersten und zweiten Anzeigen transparent ausgebildet ist.

2. Dokument nach Anspruch 1, **dadurch gekennzeichnet, dass** es sich bei den ersten ansteuerbaren Anzeigeelementen um bistabile Anzeigeelemente handelt.

3. Dokument nach Anspruch 1 oder 2, **dadurch gekennzeichnet, dass** die ersten ansteuerbaren Anzeigeelemente Teil einer ersten Anzeige (102) sind, und wobei die erste Anzeige als Hybridanzeige oder als reflektive, filexible Anzeige ausgebildet ist.

4. Dokument nach einem der vorhergehenden Ansprüche, **dadurch gekennzeichnet, dass** es sich bei den zweiten ansteuerbaren Anzeigeelementen um emissive Anzeigeelemente handelt.

5. Dokument nach einem der vorhergehenden Anspruche, **dadurch gekennzeichnet, dass** es sich bei den Anzeigeelementen um Anzeigesegmente handelt.

6. Dokument nach einem der vorhergehenden Ansprüche, **dadurch gekennzeichnet, dass** die Anzeigeelemente matrixförmig in einer Aktiv- oder Passivmatrix angeordnet sind.

7. Dokument nach einem der vorhergehenden Ansprüche, **dadurch gekennzeichnet, dass** die ersten und zweiten ansteuerbaren Anzeigeelemente eine gemeinsame Steuerelektrode (120; 128) aufweisen.

8. Dokument nach einem der vorhergehenden Ansprüche, **dadurch gekennzeichnet, dass** die ersten und zweiten ansteuerbaren Anzeigeelemente in einer Aktivmatrix angeordnet sind, wobei die Aktivmatrix Aktivierungsschaltungen (154) zur Ansteuerung von je einem der ersten und zweiten ansteuerbaren Anzeigeelemente aufweist.

9. Dokument nach Anspruch 8, mit einem schichtförmigen Aufbau, mit zumindest einer ersten Schicht (118) zur Bildung der ersten ansteuerbaren Anzeigeelemente und mit zumindest einer dritten Schicht (124) zur Bildung der zweiten ansteuerbaren Anzeigeelemente und mit zumindest einer zwischen den ersten und dritten Schichten angeordneten zweiten Schicht (126; 154), durch die Aktivierungsschaltungen gebildet werden.

10. Dokument nach einem der vorhergehenden Ansprüche, **dadurch gekennzeichnet, dass** die ersten und zweiten ansteuerbaren Anzeigeelemente in einem ersten Bereich (192) der Anzeigevorrichtung übereinander angeordnet sind, und wobei in einem zweiten Bereich (194) der Anzeigevorrichtung nur erste oder zweite ansteuerbare Anzeigeelemente vorhanden sind.

11. Dokument nach Anspruch 10, **dadurch gekennzeichnet, dass** die Steuerungsmittel zur Ansteuerung der in dem zweiten Bereich befindlichen ersten oder zweiten ansteuerbaren Anzeigeelemente für eine optische Kommunikation mit einem Lesegerät ausgebildet sind.

12. Dokument nach einem der vorhergehenden Ansprüche, **dadurch gekennzeichnet, dass** es sich bei den Daten um ein Gesichtsbild, die Abbildung eines Fingerabdrucks, die Abbildung eines anderen biometrischen Merkmals und/oder eine Bildsequenz handelt.

13. Verfahren zur Herstellung eines Dokuments nach Anspruch 9: mit folgenden Schritten:
- Zurverfügungstellung zumindest der ersten Schicht (118), wobei die erste Schicht die ersten ansteuerbaren Anzeigeelemente (146) beinhaltet, die zur Wiedergabe der Daten keine Energieversorgung benötigen wobei die ersten Anzeigeelemente zu der ersten Anzeige (102) gehören.
- Aufbringung zumindest der zweiten Schicht (126) auf die erste Schicht, wobei die zweite Schicht Aktivierungsschaltungen (154) beinhaltet,
- Aufbringung zumindest der dritten Schicht (124) auf die zweite Schicht, wobei die dritte Schicht die zweiten ansteuerbaren Anzeigeelemente (148) beinhaltet, die zur Wiedergabe der Daten eine Energieversorgung benötigen, wobei die zweiten Anzeigeelemente zu der zweiten Anzeige (104) gehört wobei die Aktivierungsschaltungen zur Ansteuerung der ersten und zweiten Anzeigeelemente der resultierenden Anzeigevorrichtung ausgebildet sind,
- Integration der Anzeigevorrichtung in einen Dokumentenkörper (182).

14. Verfahren nach Anspruch 13, wobei die zweiten Schichten eine Steuerelektrode (128; 128) beinhalten, die zur Ansteuerung sowohl der ersten als auch der zweiten Anzeigeelemente ausgebildet ist.

15. Verfahren nach Anspruch 13 oder 14, wobei eine oder mehrere der Schichten mittels Dünnschicht- oder Drucktechnik aufgebracht werden.

## Claims

1. A document, in particular a value or security document, comprising a display device (100), wherein the display device has first controllable display elements (102; 146), which do not require a power supply in order to reproduce data, and second controllable display elements (104; 148), which do require a power supply in order to reproduce the data, and comprising control means (106) for controlling the first and second display elements for the reproduction of the same data, **characterised in that** the first display elements belong to a first display (102) and the second display elements belong to a second display (104), wherein the first and second displays are arranged one above the other, and wherein one of the first and second displays is reflective and the other of the first and second displays is transparent.

2. The document according to Claim 1, **characterised in that** the first controllable display elements are bistable display elements.

3. The document according to Claim 1 or 2, **characterised in that** the first controllable display elements are part of a first display (102), and wherein the first display is formed as a hybrid display or as a reflective, flexible display.

4. The document according to one of the preceding claims, **characterised in that** the second controllable display elements are emissive display elements.

5. The document according to one of the preceding claims, **characterised in that** the display elements are display segments.

6. The document according to one of the preceding claims, **characterised in that** the display elements are arranged in a matrix-shaped manner in an active or passive matrix.

7. The document according to one of the preceding claims, **characterised in that** the first and second controllable display elements have a common control electrode 120; 128).

8. The document according to one of the preceding claims, **characterised in that** the first and second controllable display elements are arranged in an active matrix, wherein the active matrix comprises activation circuits (154) for controlling each of the first and second controllable display elements.

9. The document according to Claim 8, comprising a layered structure, with at least one first layer (118) for forming the first controllable display elements and with at least one third layer (124) for forming the second controllable display elements, and with at least one second layer (126; 154) arranged between the first and third layers, by means of which activation circuits are formed.

10. The document according to one of the preceding claims, **characterised in that** the first and second controllable display elements are arranged one above the other in a first region (192) of the display device, and wherein, in a second region (194) of the display device, only first or second controllable display elements are provided.

11. The document according to Claim 10, **characterised in that** the control means for controlling the first or second controllable display elements located in the second region are designed for optical communication with a reading device.

12. The document according to one of the preceding claims, **characterised in that** the data is a facial image, the image of a fingerprint, the image of another biometric feature and/or an image sequence.

13. A method for producing a document according to Claim 9, said method comprising the following steps:
- making available at least the first layer (118), wherein the first layer includes the first controllable display elements (146), which do not require a power supply in order to reproduce the data, wherein the first display elements belong to the first display (102),
- application of at least the second layer (126) to the first layer, wherein the second layer includes activation circuits (154),
- application of at least the third layer (124) to the second layer, wherein the third layer includes the second controllable display elements (148), which do require a power supply in order to reproduce the data, wherein the second display elements belong to the second display (104), wherein the activation circuits are designed to control the first and second display elements of the resultant display device,
- integration of the display device in a document body (182).

14. The method according to Claim 13, wherein the second layers include a control electrode (128; 128), which is designed to control both the first and the second display elements.

15. The method according to Claim 13 or 14, wherein one or more of the layers are applied by means of thin-film or printing technology.

## Revendications

1. Document, en particulier un document de valeur ou de sécurité, avec un dispositif d'affichage (100), dans lequel le dispositif d'affichage comporte des premiers éléments d'affichage (102 ; 146) ne nécessitant pas d'alimentation en énergie pour la reproduction de données, et des deuxièmes éléments d'affichage (104 ; 148) nécessitant une alimentation en énergie pour la reproduction de données, et avec des moyens de commande (106) pour l'actionnement des premiers et deuxièmes éléments d'affichage en vue de la reproduction desdites données, **caractérisé en ce que** les premiers éléments d'affichage appartiennent à un premier affichage (102) et les deuxièmes éléments d'affichage appartiennent à un deuxième affichage (104), dans lequel les premier et deuxième affichages sont agencés l'un au-dessus de l'autre, et dans lequel l'un parmi les premier et deuxième affichages est conçu réfléchissant et l'autre parmi les premier et deuxième affichages est conçu transparent.

2. Document selon la revendication 1, **caractérisé en ce que** les premiers éléments d'affichage actionnables sont des éléments d'affichage bistables.

3. Document selon la revendication 1 ou 2, **caractérisé en ce que** les premiers éléments d'affichage actionnables font partie d'un premier affichage (102), et dans lequel le premier affichage est conçu comme un affichage hybride ou comme un affichage réfléchissant et souple.

4. Document selon l'une des revendications précédentes, **caractérisé en ce que** les deuxièmes éléments d'affichage actionnables sont des éléments d'affichage émissifs.

5. Document selon l'une des revendications précédentes, **caractérisé en ce que** les éléments d'affichage sont des segments d'affichage.

6. Document selon l'une des revendications précédentes, **caractérisé en ce que** les éléments d'affichage sont agencés en forme de matrice dans une matrice passive ou active.

7. Document selon l'une des revendications précédentes, **caractérisé en ce que** les premiers et deuxièmes éléments d'affichage actionnables comportent une électrode de commande commune (120 ; 128).

8. Document selon l'une des revendications précédentes, **caractérisé en ce que** les premiers et deuxièmes éléments d'affichage actionnables sont agencés dans une matrice active, dans lequel la matrice active comporte des circuits d'activation (154) pour l'actionnement de l'un respectivement parmi les premiers et deuxièmes éléments d'affichage.

9. Document selon la revendication 8, avec une structure en couches, avec au moins une première couche (118) pour la formation des premiers éléments d'affichage actionnables, et avec au moins une troisième couche (124) pour la formation des deuxièmes éléments d'affichage actionnables, et avec au moins une deuxième couche (126 ; 154) agencée entre les première et troisième couches, permettant de former les circuits d'activation.

10. Document selon l'une des revendications précédentes, **caractérisé en ce que** les premiers et deuxièmes éléments d'affichage actionnables sont agencés les uns au-dessus des autres dans une première région (192) du dispositif d'affichage, et dans lequel seuls des premiers ou des deuxièmes éléments d'affichage actionnables sont présents dans une deuxième région (194) du dispositif d'affichage.

11. Document selon la revendication 10, **caractérisé en ce que** les moyens de commande sont conçus pour l'actionnement des premiers ou deuxièmes éléments d'affichage situés dans la deuxième région, en vue d'une communication optique avec un dispositif de lecture.

12. Document selon l'une des revendications précédentes, **caractérisé en ce que** les données sont une image de visage, la reproduction d'une empreinte digitale, la reproduction d'une autre caractéristique biométrique et/ou une séquence d'images.

13. Procédé pour la fabrication d'un document selon la revendication 9, avec les étapes suivantes :
- mise à disposition d'au moins une première couche (118), où la première couche contient les premiers éléments d'affichage actionnables (146) ne nécessitant pas d'alimentation en énergie pour la reproduction de données, les premiers éléments d'affichage appartenant au premier affichage (102),
- application d'au moins la deuxième couche (126) sur la première couche, la deuxième couche contenant des circuits d'activation (154),
- application d'au moins la troisième couche (124) sur la deuxième couche, la troisième couche contenant les deuxièmes éléments d'affichage actionnables (148) nécessitant une alimentation en énergie pour la reproduction de données, les deuxièmes éléments d'affichage appartenant au deuxième affichage (104), les circuits d'activation étant conçus pour l'actionnement des premiers et deuxièmes éléments d'affichage du dispositif d'affichage résultant,
- intégration du dispositif d'affichage dans un corps de document (182).

14. Procédé selon la revendication 13, dans lequel les deuxièmes couches contiennent une électrode de commande (128 ; 128) conçue pour l'actionnement des premiers et des deuxièmes éléments d'affichage.

15. Procédé selon la revendication 13 ou 14, dans lequel l'une ou plusieurs des couches est/sont appliquée(s) au moyen d'une technique en couche mince ou d'impression.
